Europäisches Patentamt

European Patent Office

Office européen des brevets

(11) Publication number: **0 024 929**
B1

(12) **EUROPEAN PATENT SPECIFICATION**

(45) Date of publication of patent specification: 04.04.84

(21) Application number: 80302996.6

(22) Date of filing: 29.08.80

(51) Int. Cl.³: **B 32 B 27/40,** B 32 B 5/24, C 08 J 9/30

(54) Production of polyurethane foams, and foams made thereby.

| | |
|---|---|
| (30) Priority: 31.08.79 GB 7930154 | (73) Proprietor: BP Chemicals Limited<br>Britannic House Moor Lane<br>London, EC2Y 9BU (GB) |
| (43) Date of publication of application:<br>11.03.81 Bulletin 81/10 | |
| | (72) Inventor: Berthevas, Paul<br>BP Chemicals (Suisse) S.A. 243 routes des<br>Fayards<br>CH-1290 Versoix/Geneva (CH) |
| (45) Publication of the grant of the patent:<br>04.04.84 Bulletin 84/14 | |
| (84) Designated Contracting States:<br>BE DE FR GB IT NL | (74) Representative: Ryan, Edward Terrence et al,<br>BP INTERNATIONAL LIMITED Patents and<br>Licensing Division Chertsey Road<br>Sunbury-on-Thames Middlesex, TW16 7LN (GB) |
| (56) References cited:<br>US - A - 3 989 869<br>US - A - 4 022 941<br>US - D - 373 354 | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 024 929

## Production of polyurethane foams, and foams made thereby

The present invention relates to a process for the production of polyurethane froth foams.

Polyurethane foams are conventionally made by the action of a blowing agent (water) on free isocyanate groups present in the polyurethane resin mixture which is to be foamed. Foaming and curing take place at the same time in the conventional system.

GB 1 306 372 discloses a process for making a polyurethane foam which does not make use of chemical blowing agents to make a foam but which instead produces a foam by beating air or other inert gas (i.e. gas which is inert under the reaction conditions) into the liquid mixture of polyurethane resin components. These foams made by beating in air or other inert gas are known as froth foams and are referred to as such throughout this specification. The froth foam is cured in a separate step by application of heat. Froth foams are particularly useful in the floor covering industry to provide a foamed underlayer for carpets and other types of floor covering, for example, the so-called vinyl floor coverings based on flexible polyvinyl chloride sheet.

Froth foams are generally used by applying the foam to a continuous moving band of material. The surface may be the material to which the foam has to be applied. It may also be a release paper from which the cured foam is subsequently removed for bonding to the material, for example, floor covering, to which it has finally to be applied. The thickness of the foam layer may be controlled, for example, by passing the uncured foam layer beneath a knife or doctor blade.

The moving band carrying the froth foam is then usually passed to an oven in which the foam cures. At the same time the density of the foam decreases because of thermal expansion of the air bubbles in the foam. The cured foam is thus less dense than the uncured foam fed to the process and the thickness of the cured foam layer is greater than the thickness of the uncured foam layer sent to the curing stage.

The user of the froth foam generally specifies that the cured foam layer must have a certain minimum thickness. If the density of the cured foam can be decreased, the total quantity of polyurethane resin ingredients required for a given thickness of foam can be reduced. However, there is a practical limit on the amount of inert gas (e.g. air) which can be incorporated into a froth foam by beating. The decrease in density on curing generally has a relationship to the density of the uncured foam and the density of a cured foam is typically about 70% of the density of the uncured foam for foams described in the above mentioned British patent.

We have now found a method of obtaining a greater reduction in foam density of froth foams on curing than could normally be obtained by the prior art method.

According to the present invention the process of producing a cured polyurethane froth foam comprises feeding a froth of a liquid mixture giving polyurethane on curing onto a support to form a layer of pre-determined thickness followed by heating to cure the foam characterised in that the curing of the foam takes place with a layer of material which has been brought into contact with the uncured froth foam on its support without any substantial crushing or depression of the foam and that the layer of material is free to move outwardly from the support in response to any expansion of the foam.

Polyurethane resin ingredients suitable for use in making froth foams are known to those skilled in the art.

Thus suitable isocyanate and polyols are disclosed in British Patent Specification 1,306,372.

It is particularly preferred to use organic polysiloxane surfactants which are high molecular weight linear siloxanepolyoxyalkylene block copolymers of the $(AB)_n$ type where n is an integer, each A is a siloxane block and each B is a polyoxyalkylene block, the blocks being linked by a divalent atom or a divalent group.

Said high molecular weight siloxane-polyoxyalkylene block copolymers may be divided into two classes.

1. hydrolyzable block copolymers, i.e. those wherein the siloxane blocks and the polyoxyalkylene blocks are linked by silicon to oxygen to carbon linkages, and

2. non-hydrolyzable (hydrolytically stable) block copolymers, i.e. those wherein the siloxane blocks and polyoxyalkylene blocks are linked by silicon to carbon linkages. The preferred copolymer surfactants are those of the hydrolyzable type.

The siloxane block in the above mentioned linear copolymers is a linear siloxane polymer or chain of recurring siloxane units, $(-R_2SiO-)$, and is illustrated by the average formula $-(-R_2SiO-)-_x$, for the hydrolyzable block copolymers and by the average formula $-(-R_2SiO-)-_a R_2Si-$ for the non-hydrolyzable block copolymers, wherein R is a monovalent hydrocarbon group, x is an integer of at least 7 and a is an integer of at least 6. The average molecular weight of each siloxane block of said siloxanepolyoxyalkylene copolymers ranges from about 500 to about 10,000. Moreover, the monovalent hydrocarbon radicals need not be identical throughout the siloxane block, but can differ from siloxane unit to siloxane unit and can even be different within a single siloxane unit.

Such high molecular weight linear block copolymers are described in more detail in US Patent Specification 4,022,941.

2

The liquid mixture of polyurethane components subjected to frothing may contain various conventional additives, e.g. catalysts, cross-linking agents. Examples of such additives are disclosed in British Patent 1,306,372.

Details of how froths can be prepared are given in the above British Patent Specification. It is cheapest and most convenient to prepare froth foams using air but any other inert gas, i.e. gas which does not react with any component of the liquid phase may be used, e.g. nitrogen, carbon dioxide.

If $x$ is the density of the froth foam and $y$ is the density of the unfrothed liquid (at ambient temperature and atmospheric pressure) then the known foams are made by beating in sufficient air such that $x$ is less than 0.45 $y$. Because the process of the present invention gives a bigger reduction in density on curing, it may be preferred only to introduce sufficient inert gas at the frothing stage such that $x$ is *not* less than 0.45 $y$, more preferably not less than 0.5 $y$, more preferably not less than 0.6 $y$.

For any desired foam density it is preferred to incorporate sufficient inert gas to give a density of uncured foam not less than 150% of the density of the cured foam, more preferably not less than 200% of the density of the cured foam. It is thus a feature of the present invention that it enables a cured froth foam of density d to be obtained from a froth having a density of not less than 1.5 d.

There is a practical limitation on the maximum amount of air or other inert gas which can be incorporated into a froth. The present invention enables a cured froth foam layer to be obtained which has an average density which is a lower percentage of the uncured froth foam density than when the process of the invention is not used. The process of the present invention therefore enables cured froth foam layers to be obtained which have densities below those which can normally be obtained. Thus the process of the present invention can be used to produce cured froth foam layers with an average density below 450 g/litre, more particularly below 400 g/litre.

The support layer to which the froth foam is applied may be a release paper or may be a layer of material to which it is desirable to bond the foam providing that the material is one which can withstand the temperature used for curing and forms a good bond with foam.

The layer in contact with the froth foam and which is free to move outwardly may be a material which it is desired to bond to the foam, for example, a fibrous reinforcing layer. Alternatively it may be a release paper. Where the support and the layer free to move outwards are both release papers they may be stripped off after curing to give a layer consisting of foam only. It is to be understood that the term release paper embraces not only sheets made from cellulose fibres but any material which does not bond to the foam and can be stripped off after curing.

Where the layer free to move outwardly is a fibrous reinforcing material it is preferable for it to be one which is wetted by the foam to give good bonding to the cured foam. Examples of suitable fibrous sheet reinforcing materials are glass fibre mats and veils. The weight per unit area of any material, e.g. a fibrous reinforcing mat or veil which is to be free to move outwardly with froth foam should be such that the foam is not crushed or depressed. The optimum weight per unit may be determined by a simple test.

The process of the present invention may be used to apply a polyurethane foam backing layer to a floor covering having an upper layer of vinyl chloride polymer. It may also be used in the manufacture of carpets. Carpets are often provided with a backing of fibrous material e.g. jute or polypropylene. This backing is at present usually fixed to the carpet by a latex adhesive. The process of the present invention may be used to apply a polyurethane froth foam to the back of a carpet to bring the backing layer into kissing contact with the foam, and then to cure the froth foam. The polyurethane foam can then serve as an adhesive to bond the backing to the carpet. At the same time it provides a resilient interlayer of reduced density so increasing comfort.

A convenient method of carrying out the invention is to apply uncured froth foam continuously to a moving band of support material e.g. a release paper. The thickness of the foam is controlled by a knife or doctor blade under which the moving band passes. A layer of material is applied to the upper surface of the froth foam by being fed into contact with the foam by a so-called "kiss roll." This kiss roll is so operated that the layer of material applied by it is brought into contact without pressing or depressing the foam significantly. The moving band is then passed through an oven in which the foam cures. Examples of suitable curing conditions are temperatures of 120°C to 200°C and residence times from 1 to 10 minutes.

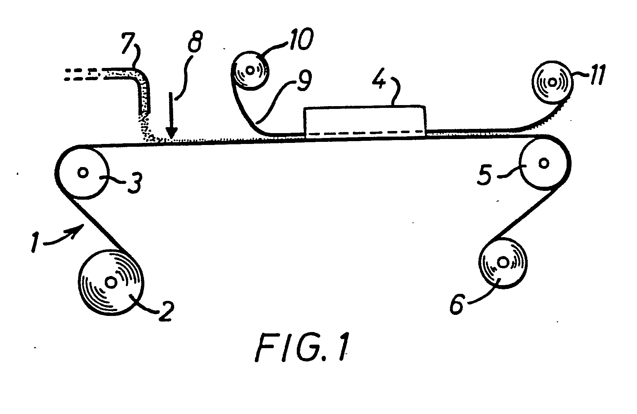

Apparatus suitable for carrying out the process of the present application is shown diagrammatically in Figure 1.

Release paper 1 is unwound continuously from a reel of release paper 2 and after passing over roll 3 moves in a horizontal path through a tunnel oven 4 and is then after passing round roll 5 taken up on take-up reel 6. Polyurethane froth is fed on to the release paper through nozzle 7. A knife blade 8 extending across the width of the strip of release paper regulates the thickness of the layer of froth which is carried on the release paper to the oven. The distance between the lower edge of the knife and the release paper strip can be adjusted to control the thickness of the froth layer.

A fabric layer 9 is unwound from a kiss roll 10 on to the froth layer without any substantial crushing of the froth. The froth passes into the oven where it is heated and cured. During the heating step the cured foam bonds to the fabric layer and the combined layers are wound up on to roll 11.

## Examples 1—3

A froth foam was prepared from a mixture of polyols, isocyanate, catalyst and surfactant in a conventional way in an Oakes mixer.

The froth form formulation used consisted of

|  | parts by weight |
|---|---|
| A mixture of polyether polyols | 95 |
| Monoethylene glycol | 5 |
| A silicone surfactant (a high molecular weight linear block copolymer of formula $(AB)_n$ where n is an integer and each A is a polyoxyalkylene block, the blocks being linked through a divalent atom or group. | 1 |
| Catalyst (dehydrated nickel acetyl acetonate, 10% solution in xylene). | 2 |
| Calcium carbonate filler | 140 |
| Polymethylene polyphenyl isocyanate (Crude MDI) | 35.6 |

The quantity of air incorporated into the mixture was sufficient to give a density at ambient temperature of 720 g/litre. This density was determined by filling a cup of known volume with the froth until the froth was level with the top and then weighing the cup. The density of the froth measured in this way is sometimes known as cup density.

The froth was fed on to a release paper which was unwound from a reel at a constant rate. The release paper passed under a knife which regulated the depth of froth on the paper. A light non-woven fibrous fabric veil made from a mixture of polyester fibres and glass fibre was fed from a kiss roll on to the foam so as to be in kissing contact with the froth. The release paper, froth and veil then passed through a tunnel oven in which the froth was cured. After leaving the oven the cured foam and the veil adhering to it were wound up on to a roll and the release paper was wound up on to a separate roll.

The conditions used and results obtained are set out in Table 1.

## Test A

This is a comparative test not according to the invention. This was carried out exactly as in Example 1 but without the veil being applied. The results are given in Table 1.

### TABLE 1

| Examples |  | 1 | 2 | 3 | Test A |
|---|---|---|---|---|---|
| Froth cup density | g/litre | 720 | 720 | 720 | 720 |
| Coating width | cm | 34 | 34 | 34 | 34 |
| Oven length | m | 4 | 4 | 4 | 4 |
| Running speed | m/min | 1.9 | 2.25 | 0.8 | 2.25 |
| Foam temperature on leaving oven | °C | ca 210 | ca 210 | ca 210 | ca 210 |
| Average cured foam density | g/litre | 333 | 343 | 356 | 509 |
| Percentage of froth cup density | g/litre | 46.3 | 47.6 | 51.1 | 70.6 |

4

# 0 024 929

## Example 4

A froth foam was prepared from a mixture of polyol, isocyanate, catalyst and surfactant in a conventional way in an Oakes mixer.

The froth form formulation used consisted of

| | parts by weight |
|---|---|
| A polyether polyol based on glycerine (triol) with propylene oxide chain extension and ethylene oxide end capping and having a hydroxyl number of 34. | 96 |
| Monoethylene glycol | 4 |
| A silicone surfactant (a high molecular weight linear block copolymer of formula $(AB)_n$ when n is an integer, each A is a dimethyl silicone block and each B is a polyoxyalkylene block, the blocks being linked through a divalent atom or group. | 2 |
| Catalyst (dehydrated nickel acetyl acetonate, 1% solution in xylene). | 2 |
| Calcium carbonate filler ($10\mu$ average particle size). | 120 |
| Polymethylene polyphenyl isocyanate (Crude MDI). | 28 |

The froth was applied to a continuously moving band of release paper as in Example 1. The conditions used and results obtained are set out in Table 2.

## Test B

This was carried out as in Example 4 except that no fabric veil was applied to the froth.

### TABLE 2

| | | Example 4 | Test B |
|---|---|---|---|
| Froth cup density | g/litre | 1100 | 1100 |
| Knife gauge | mm | 1.2 | 1.2 |
| Coating speed | m/min | 1.9—2.0 | 1.9—2.0 |
| Oven length | m | 4 | 4 |
| Foam temperature on leaving oven | °C | 182 | 182 |
| Cured foam thickness | mm | 2.0 | 1.3 |
| Average foam density | g/litre | 475 | 700 |
| Foam density percentage of froth cup density | | 43.2 | 63.6 |

## Claims

1. A process for producing a cured polyurethane froth foam which comprises feeding a froth of a liquid mixture giving polyuethane on curing a support to form a layer of pre-determined thickness followed by heating to cure the foam characterised in that the curing of the foam takes place with a

5

layer of material which has been brought into contact with the uncured froth foam on its support without any substantial crushing or depression of the foam and that the layer of material is free to move outwardly from the support in response to any expansion of the foam.

2. A process according to claim 1 wherein the froth foam is prepared using an organosilicone surfactant which is a high molecular weight linear siloxanepolyoxyalkylene block copolymer of general formula $(AB)_n$ where n is an integer, each A is a siloxane block and each B is a polyoxyalkylene block, the blocks being linked by a divalent atom or a divalent group.

3. A process according to either one of claims 1 or 2 wherein the quantity of inert gas introduced at the frothing stage is such as to give an uncured froth foam of density x not less than 0.45 y where y is the density of the unfrothed liquid from which the forth foam is prepared.

4. A process according to claim 3 wherein x is not less than 0.5 y.

5. A process according to claim 4 wherein x is not less than 0.6 y.

6. A process according to any one of the preceding claims wherein a cured forth foam of density d is made by feeding to the process an uncured froth foam of density not less than 1.5 d.

7. A process according to any one of the preceding claims wherein the froth foam is applied to a support layer which is a release layer.

8. A process according to any one of the preceding claims wherein the layer which is free to move outwardly is a fibrous reinforcing material.

9. A process as claimed in any one of the preceding claims which comprises controlling the condition to produce a cured froth foam which has an average density less than 450g/litre.

10. A process as claimed in claim 9 which comprises controlling the convention to produce a cured froth foam which has an average density of less than 400g/litre.

## Patentansprüche

1. Verfahren zur Herstellung eines ausgehärteten Polyurethanschaumes, wobei ein flüssiges, bei Aushärtung Polyurethan lieferndes Schaumstoffgemisch unter Bildung einer Schicht vorbestimmer Dicke auf einen Träger gebracht wird und nachfolgend erhitzt wird um den Schaum auzuhärten, dadurch gekennzeichnet, daß die Aushärtung des Schaumes stattfindet mit einer Materialschicht, die mit dem ungehärteten Schaumstoffgemisch auf seinem Träger in Berührung gebracht worden ist ohne wesentliches Eindrücken oder Herunterdrücken des Schaumes und daß die Materialschicht frei ist sich nach außen von dem Träger zu bewegen als Folge einer Expansion des Schaumes.

2. Verfahren gemäß Anspruch 1, wobei der Schaum hergestellt wird unter Verwendung eines organosilikon-oberflächenaktiven Mittels, welches ein hochmolekulares lineares Siloxanpolyoxyalkylen-Blockcopolymer der allgemeinen Formel $(AB)_n$ ist, wobei n eine ganze Zahl ist, jedes A einen Siloxanblock darstellt und jedes B einen Polyoxyalkylenblock, wobei die Blöcke miteinander verbunden sind durch ein zweiwertiges Atom oder eine zweiwertige Gruppe.

3. Verfahren gemäß einem der Ansprüche 1 oder 2, wobei die Menge an Inertgas, die während der Schäumungsstufe eingeführt wird, derart ist, daß ein nichtgehärteter Schaum der Dichte x nicht geringer als 0,45 y entsteht, wobei y die Dichte der nicht-geschäumten Flüssigkeit ist aus dem der Schaum hergestellt wird.

4. Verfahren gemäß Anspruch 3, wobei x nicht geringer ist als 0,5 y.

5. Verfahren gemäß Anspruch 4, wobei x nicht geringer ist als 0,6 y.

6. Verfahren gemäß einem der vorgehenden Ansprüche, wobei ein ausgehärteter Schaum der Dichte d hergestellt wird indem in das Verfahren ein nicht-gehärteter Schaum der Dichte von nicht weniger als 1,5 d eingeführt wird.

7. Verfahren gemäß einem der vorgehenden Ansprüche, wobei der Schaum auf einer Trägerschicht abgelagert wird, die eine abnehmbare Schicht ist.

8. Verfahren gemäß einem der vorgehenden Ansprüche, wobei die Schicht, die sich frei nach außen bewegen kann, ein faserförmiges Verstärkungsmaterial ist.

9. Verfahren gemäß einem der vorgehenden Ansprüche, wobei die Bedingungen kontrolliert werden, so daß ein ausgehärteter Schaum hergestellt wird mit einer durchschnittlichen Dichte von weniger als 450 g/l.

10. Verfahren gemäß Anspruch 9, wobei die Bedingungen so geregelt werden, daß ein ausgehärteter Schaum mit einer durchschnittlichen Dichte von weniger als 400 g/l hergestellt wird.

## Revendications

1. Procédé de production d'une mousse mécanique de polyuréthanne polymérisée, qui comprend la disposition d'une mousse d'un mélange liquide donnant un polyuréthanne par polymérisation sur un support afin qu'une couche d'épaisseur prédéterminée soit formée, puis le chauffage afin que la mousse polymérise, caractérisé en ce que la polymérisation de la mousse est réalisée avec une couche d'une matière qui a été mise au contact de la mousse mécanique non polymérisée placée sur son support, sans écrasement ou affaissement notable de la mousse, et en ce que la couche de matière est libre de s'écarter du support lors d'une dilatation de la mousse.

2. Procédé selon la revendication 1, caractérisé en ce que la mousse mécanique est préparée à l'aide d'un agent tensioactif d'organosilicone qui est copolymère séquencé de siloxane-polyoxyalkylène linéaire de poids moléculaire élevé de formule générale $(AB)_n$ dans laquelle n est un nombre entier, chaque groupe A désigne un bloc siloxane et chaque groupe B désigne un bloc polyoxyalkylène, les blocs étant liés par un atome ou un groupe divalent.

3. Procédé selon l'une des revendications 1 et 2, caractérisé en ce que la quantité de gaz inerte introduite dans l'opération de formation de mousse est telle qu'elle donne une mousse mécanique non polymérisée de masse volumique x qui n'est pas inférieur à 0,45 y, y étant la masse volumique du liquide ne formant pas de mousse à partir duquel la mousse mécanique est préparée.

4. Procédé selon la revendication 3, caractérisé en ce que x n'est pas inférieur à 0,5 y.

5. Procédé selon la revendication 4, caractérisé en ce que x n'est pas inférieur à 0,6 y.

6. Procédé selon l'une quelconque des revendications précédentes, caractérisé en ce que la mousse mécanique polymérisée de masse volumique d est préparée par utilisation pour la production d'une mousse mécanique non polymérisée dont la masse volumique n'est pas inférieure à 1,5 d.

7. Procédé selon l'une quelconque des revendications précédentes, caractérisé en ce que la mousse mécanique est appliquée sur une couche de support qui est une couche de démoulage.

8. Procédé selon l'une quelconque des revendications précédentes, caractérisé en ce que la couche qui est libre de s'écarter est une matière fibreuse d'armature.

9. Procédé selon l'une quelconque des revendications précédentes, caractérisé en ce qu'il comprend le réglage des conditions afin qu'une mousse mécanique polymérisée produite ait une masse volumique moyenne inférieure à 450 kg/m$^3$.

10. Procédé selon la revendication 9, caractérisé en ce qu'il comprend le réglage des conditions de manière que la mousse mécanique polymérisée obtenue ait une masse volumique moyenne inférieure à 400 kg/m$^3$.

FIG.1